# EUROPÄISCHE PATENTSCHRIFT

(11) **EP 2 510 027 B1**
(45) Veröffentlichungstag und Bekanntmachung des Hinweises auf die Patenterteilung: **03.10.2018**
(21) Anmeldenummer: 10784325.2
(22) Anmeldetag: 06.12.2010
(51) Int. Cl.: C08G 18/10, C08G 18/76, C09J 175/08, C08G 18/48

(54) **POLYURETHAN-PREPOLYMERE**
POLYURETHANE PREPOLYMERS
PREPOLYMERES POLYURETHANE

(30) Priorität: 09.12.2009 DE 102009057584
(43) Veröffentlichungstag der Anmeldung: 17.10.2012
(73) Patentinhaber: Covestro Deutschland AG, 51373 Leverkusen (DE)
(72) Erfinder: PEIFFER, Evelyn, 51375 Leverkusen (DE); MATNER, Mathias, 41464 Neuss (DE)
(74) Vertreter: Levpat
(86) Internationale Anmeldenummer: PCT/EP2010/068978
(87) Internationale Veröffentlichungsnummer: WO 2011/069969

(56) Entgegenhaltungen:
- EP-A1- 0 807 649
- EP-A1- 1 674 546
- WO-A1-2005/049684

## Beschreibung

Die vorliegende Erfindung betrifft Polyurethan-Prepolymere, ein Verfahren zu ihrer Herstellung und ihre Anwendung als Bindemittel für Klebstoffe, Beschichtungen oder Schäume.

Alkoxysilanfunktionelle Polyurethane, die über eine Silanpolykondensation vernetzen, sind seit langem bekannt. Ein Übersichtsartikel zu dieser Thematik findet sich z.B. in "Adhesives Age" 4/1995, Seite 30 ff. (Autoren: Ta-Min Feng, B. A. Waldmann). Derartige alkoxysilanterminierte, feuchtigkeitshärtende Einkomponenten-Polyurethane werden in zunehmendem Maße als weichelastische Beschichtungs-, Dichtungs- und Klebmassen im Bauwesen und in der Automobilindustrie verwendet.

Solche alkoxysilanfunktionellen Polyurethane können gemäß US-A 3,627,722 oder DE-A 1 745 526 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird.

Die Veröffentlichungen EP-A 0 397 036, DE-A 19 908 562 (entspr. EP-A 1 093 482) und US-A 2002/0100550 beschreiben weitere unterschiedliche Wege zur Herstellung von alkoxysilanterminierten Polymeren. Gemäß dieser Schriften werden jeweils hochmolekulare Polyether mit einem durchschnittlichen Molekulargewicht von 4000g/mol oder größer eingesetzt.

All diese alkoxysilanterminierten Systeme bilden nach der Aushärtung weichelastische Polymere mit einer relativ geringen Festigkeit und einer hohen Bruchdehnung. Die DE-A 1 745 526 beschreibt für Polyoxypropylenglykol-basierte Polymere Zugfestigkeiten im Bereich von 3,36 kg/cm² bis 28,7 kg/cm². Nur mit kristallisierenden Polycaprolactonen werden Festigkeiten erreicht, die für strukturelle Klebungen ausreichend hoch sind.

Diese Systeme sind aber bei Raumtemperatur sehr hochviskos oder fest und können daher nur warm verarbeitet werden.

Dementsprechend ist der Anwendungsbereich der oben genannten Anmeldungen einerseits auf Dichtstoffe und weichelastische Klebstoffe, andererseits auf hochviskose oder feste Systeme, die nur warm verarbeitet werden können, beschränkt.

Der vorliegenden Erfindung lag daher die Aufgabe zugrunde, bei Raumtemperatur flüssige, alkoxysilanterminierte Polyurethane zur Verfügung zu stellen, die ausgehärtet eine hohe Kohäsionsfestigkeit erreichen, so dass mit ihnen Klebstoffe formuliert werden können, die strukturelles Kleben ermöglichen.

Es wurde nun gefunden, dass sich derartige alkoxysilanterminierte Polyurethane herstellen lassen, indem aus 2,4'-Methylendiphenyldiisocyanat (2,4'-MDI), gegebenenfalls in Mischung mit anderen Polyisocyanaten, und einer Mischung von Verbindungen mit gegenüber Isocyanaten reaktiven Gruppen zunächst ein NCO-Prepolymer hergestellt wird. Dabei liegen in der Mischung von Verbindungen mit gegenüber Isocyanaten reaktiven Gruppen Verbindungen mit einem Molekulargewicht ≤ 2000 g/mol zu mindestens 50 Gew.-% vor. Das erhaltene NCO-Prepolymer wird dann in einem zweiten Schritt mit einem isocyanatreaktiven Alkoxysilan modifiziert.

Gegenstand der Erfindung sind daher mit Alkoxysilangruppen modifizierte, bei Raumtemperatur flüssige Polyurethan-Prepolymere einer Viskosität kleiner 1000 Pas, ermittelt nach ISO/DIS 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser, 1° Kegelwinkel), die durch Umsetzung:
a) eines isocyanatfunktionellen Prepolymers, welches Struktureinheiten der allgemeinen Formel (I) enthält, 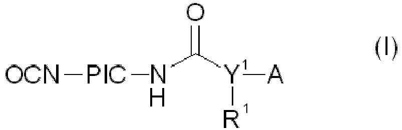 worin
   - PIC: für einen um die Isocyanatgruppen reduzierten Rest von 2,4'- Methylendiphenyldiisocyanat (2,4'-MDI) oder von einer Kombination von 2,4'-Methylendiphenyldiisocyanat mit einem anderen Polyisocyanat steht, wobei der Anteil von 2,4'-Methylendiphenyldiisocyanat mindestens 50 Gew.-% jeweils bezogen auf die Polyisocyanatkomponente (Komponente B) beträgt,
   - Y¹: für Stickstoff, Sauerstoff oder Schwefel steht,
   - R¹: entweder für ein freies Elektronenpaar oder Wasserstoff oder für einen beliebigen organischen Rest steht,
   - A: ein um die isocyanatreaktiven Gruppen reduzierter Rest eines Isocyanatreaktiven Polymers, das aus in beliebiger Reihenfolge, also blockweise, alternierend oder statistisch, über das aus den Polyisocyanaten B stammende Strukturelement der Formel

   -Y²-(C=O)-NH-PIC-NH-(C=O)-Y¹(R¹)-

   -worin Y¹ und Y² unabhängig voneinander für Stickstoff, Sauerstoff oder Schwefel stehen,
   miteinander verknüpften Polyetherpolyolen, Polyesterpolyolen, Polycarbonatpolyolen oder Polytetrahydrofuranpolyolen aufgebaut ist, wobei es sich bei den terminalen Gruppen dieser Substrukturen, ganz oder teilweise, auch um die entsprechenden Thioverbindungen oder Aminderivate handeln kann, wobei es sich
   zu 50-100 Gew.-% um Substrukturen A1 eines mittleren Molekulargewichts (Mn) zwischen 200 g/mol und 2000 g/mol und
   zu 0-50 Gew.-% um Substrukturen A2 eines mittleren Molekulargewichts (Mn) von mehr als 2000 g/mol handelt,
   und wobei A insgesamt eine mittlere Funktionalität von 2-4 aufweist,
   mit
b) einer isocyanatreaktiven Alkoxysilanverbindung (Komponente C) der allgemeinen Formel (II): 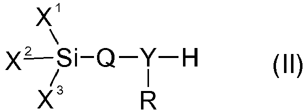 worin
   - X¹, X² und X³: gleiche oder verschiedene Alkoxy- oder Alkylreste sind, die auch verbrückt sein können, wobei aber an jedem Si-Atom mindestens ein Alkoxyrest vorhanden sein muss,
   - Q: ein difunktioneller linearer oder verzweigter aliphatischer Rest ist,
   - Y: für Stickstoff oder Schwefel steht,
   - R: entweder für ein freies Elektronenpaar oder Wasserstoff oder für einen beliebigen organischen Rest steht
   erhältlich sind.

Dabei kann die Umsetzung von a) mit b) in einem Verhältnis von 0,8 : 1,0 bis zu 1,3 : 1,0 (NCO : Y-H) erfolgen.

Die erfindungsgemäßen Verbindungen sind nicht kristallisierende, bei Raumtemperatur flüssige Stoffe mit einem zahlenmittleren Molekulargewicht von kleiner 7000 g/mol, bevorzugt kleiner 5000 g/mol und einer Viskosität kleiner 1000 Pas bei 23 °C, bevorzugt mit einer Viskosität kleiner 500 Pas bei 23 °C, besonders bevorzugt mit einer Viskosität kleiner 100 Pas bei 23 °C.

Die Mischung isocyanatreaktiver Verbindungen (Komponente A) besteht zu 50 - 100 % aus einer isocyanatreaktiven Verbindung (A1) mit 2-4 isocyanatreaktiven Gruppen und einem zahlenmittleren Molekulargewicht von 200 g/mol bis 2000 g/mol und zu 0 - 50 % aus einer isocyanatreaktiven Verbindung (A2) mit 2-4 isocyanatreaktiven Gruppen und einem zahlenmittleren Molekulargewicht von über 2000 g/mol, wobei sowohl A1 als auch A2 jeweils aus Kombinationen von Verbindungen mit isocyanatreaktiven Gruppen bestehen kann, solange diese Verbindungen in die oben beschriebenen Grenzen bezüglich des Molekulargewichtes fallen.

Als Komponente A können alle dem Fachmann bekannten Verbindungen mit isocyanatreaktiven Gruppen eingesetzt werden, welche eine Funktionalität von im Mittel mindestens zwei aufweisen. Dies können beispielsweise höhermolekulare isocyanatreaktive Verbindungen wie Polyetherpolyole, Polycarbonatpolyole, Polyesterpolyole sowie Polythioetherpolyole sein. Bevorzugt weisen solche isocyanatreaktiven Verbindungen eine mittlere Funktionalität von 2 bis 4, bevorzugt 2 bis 3,5 und besonders bevorzugt von 2 bis 3 auf.

Bevorzugt verwendet werden Polyetherpolyole. Diese sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind Moleküle mit mindestens zwei gegenüber Epoxiden reaktiven Element-Wasserstoffbindungen oder beliebige Gemische derartiger Starter-Moleküle.

Besonders geeignete Polyetherpolyole sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise einfache, niedermolekulare Polyole, Wasser, Ethylenglykol, Propandiol-1,2, 2,2-Bis(4-hydroxyphenyl)propan, Propylenglykol-1,3- und Butandiol-1,4, Hexandiol-1,6, Neopentylglykol, 2-Ethylhexandiol-1,3, Trimethylolpropan, Glyzerin, Pentaerythrit, Sorbit, organische Polyamine mit mindestens zwei N-H-Bindungen wie z.B. Triethanolamin, Ammoniak, Methylamin oder Ethylendiamin oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Es können auch Polyetherpolyolmischungen eingesetzt werden, die wenigstens ein Polyol mit wenigstens einer tertiären Aminogruppe, enthalten. Solche tertiäre Aminogruppen aufweisenden Polyetherpolyole lassen sich durch Alkoxylierung von Startermolekülen oder Mischungen von Startermolekülen, wenigstens enthaltend ein Startermolekül mit mindestens 2 gegenüber Epoxiden reaktiven Element-Wasserstoffbindungen, von denen mindestens eine eine NH-Bindung ist, oder niedermolekulare Polyolverbindungen die tertiäre Aminogruppen tragen, herstellen. Beispiele für geeignete Startermoleküle sind Ammoniak, Methylamin, Ethylamin, n-Propylamin, iso-Propylamin, Ethanolamin, Diethanolamin, Triethanolamin, Ethylendiamin, Ethylentriamin, Triethanolamin, N-Methyldiethanolamin, Ethylendiamin, N,N'-Dimethyl-ethylendiamin, Tetramethylendiamin, Hexamethylendiamin, 2,4-Toluylendiamin, 2,6-Toluylendiamin, Anilin, Diphenylmethan-2,2'-diamin, Diphenylmethan-2,4'-diamin, Diphenylmethan-4,4'-diamin, 1-Aminomethyl-3-amino-1,5,5-trimethylcyclohexan (Isophorondiamin), Dicyclohexylmethan-4,4'-diamin, Xylylendiamin und Polyoxyalkylenamine.

Auch Polyetherpolyole mit darin dispergierten organischen Füllstoffen, wie beispielsweise Additionsprodukten von Toluylendiisocyanat mit Hydrazinhydrat oder Copolymerisaten von Styrol und Acrylnitril, können eingesetzt werden.

Einsetzbar sind auch die durch Polymerisation von Tetrahydrofuran erhältlichen Polytetramethylenetherglykole mit Molekuargewichten von 400 g/mol bis 4000 g/mol, aber auch Hydroxylgruppen enthaltende Polybutadiene.

Unter den Hydroxylpolycarbonaten sind Umsetzungsprodukte von Glykolen vom Typ Ethylenglykol, Diethylenglykol, 1,2-Propylenglykol, 1,4-Butandiol, Neopentylglykol oder 1,6-Hexandiol und/oder Triolen wie beispielsweise Glyzerin, Trimethylolpropan, Pentaerythrit oder Sorbit mit Diphenyl- und/oder Dimethylcarbonat zu verstehen. Die Umsetzung ist eine Kondensationsreaktion, bei der Phenol und/oder Methanol abgespalten werden. Es resultieren, je nach Zusammensetzung, flüssige bis wachsartige, amorphe Typen mit Tg-Werten von > -40 °C oder kristalline Polycarbonatpolyole mit Schmelzbereichen von 40-90 °C, deren Molekulargewichtsbereich bei 200 g/mol bis 10000 g/mol liegt. Bevorzugt werden solche mit einem Molekulargewichtsbereich von 400 g/mol bis 5000 g/mol, besonders bevorzugt von 500 g/mol bis 3000 g/mol, eingesetzt.

Unter den Hydroxylpolyestern sind Umsetzungsprodukte von aliphatischen, cycloaliphatischen, aromatischen und/oder heterocyclischen mehrbasischen, vorzugsweise aber zweibasischen Carbonsäuren, wie beispielsweise Adipinsäure, Azelainsäure, Sebazin und/oder Dodecandisäure, Phthalsäure, Isophthalsäure, Bernsteinsäure, Korksäure, Trimellitsäure, Phthalsäureanhydrid, Tetrahydrophthalsäureanhydrid, Glutarsäureanhydrid, Tetrachlorphthalsäure-anhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester, ortho-, iso oder Terephthalsäure mit mehrwertigen, vorzugsweise zweiwertigen oder dreiwertigen Alkoholen wie beispielsweise Ethylenglykol, Diethylenglykol, Triethylenglykol, Tetraethylenglykol, 1,2-/1,3-Propandiol und, -1,4-/1,3-Butandiol, 1,6-Hexandiol, 1,8-Octandiol, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, 1,4-Phenoldimethanol, Bisphenol A, Tetrabrombisphenol A, Glycerin, Trimethylolpropan, 1,2,6-Hexantriol, 1,2,4-Butantriol, Pentaerythrit, Chinit, Mannit, Sorbit, Methylglykosid oder 4,3,6-Dianhydrohexite zu verstehen. Anstelle der freien Polycarbonsäuren können auch die entsprechenden Polycarbonsäureanhydride oder entsprechende Polycarbonsäureester von niedrigen Alkoholen oder deren Gemische zur Herstellung des Polyesters mitverwendet werden.

Die Umsetzung ist eine normale Schmelzkondensation, wie sie in Ullmanns Enzyklopädie der technischen Chemie, "Polyester", 4. Auflage, Verlag Chemie, Weinheim, 1980, beschrieben wird. Es resultieren, je nach Zusammensetzung, flüssige, amorphe Typen mit Tg-Werten von >20 °C oder kristalline Polyesterpolyole mit Schmelzbereichen von 40 - 90 °C. Die erfindungsgemäß einsetzbaren Polyesterpolyole haben zahlenmittlere Molekulargewichte von 500 g/mol bis 2500 g/mol, bevorzugt von 800 g/mol bis 2000 g/mol.

Zu nennen sind hier auch insbesondere die Produkte, die sich von Umsetzungsprodukten von Glyzerin und Hydroxylfettsäuren ableiten, insbesondere Rizinusöl und seine Derivate, wie beispielsweise einfach dehydratisiertes Rizinusöl.

Einsetzbar sind auch entsprechende Hydroxylgruppen-terminierte Poly-ε-Caprolactone.

Anteilig können in Komponente A neben den Polyhydroxyverbindungen auch Polyetheramine eingesetzt werden. Bezüglich der bevorzugten Molekulargewichte und Zusammensetzung der Mischung gelten die gleichen Grenzen, wie bereits für die Polyetherpolyole aufgezählt.

Die vorstehend erwähnten isocyanatreaktiven Verbindungen können mit allen Polyisocyanaten, aromatischen als auch aliphatischen vor der eigentlichen Prepolymerisierung zu Urethan modifizierten Hydroxylverbindungen umgesetzt werden.

Als Komponente B für die Synthese eines isocyanatfunktionellen Prepolymers wird ein Überschuss an 2,4'-MDI oder einer 2,4'-MDI-haltigen Mischung mehrerer Polyisocyanate mit mindestens 50 Gew.-% 2,4'-MDI verwendet. Als neben 2,4'-MDI verwendbare Polyisocyanate kommen aromatische, aliphatische und cycloaliphatische Diisocyanate sowie Gemische davon in Betracht. Geeignete Diisocyanate sind Verbindungen der Formel PIC(NCO)₂ mit einem mittleren Molekulargewicht unter 400 g/mol, worin PIC einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) 4,4'-Methylenbis(cyclohexylisocyanat), 3,5,5-Trimethyl-1-isocyanato-3-isocyanatomethylcyclohexan (Isophorondiisocyanat, IPDI), 2,4- und/oder 2,6-Methylcyclohexyldiisocyanat (H₆TDI) sowie ω,ω'-Diisocyanato-1,3-dimethylcyclohexan (H₆XDI), Xylylendiisocyanat (XDI), 4,4'-Diisocyanatodicyclohexylmethan, Tetramethylendiisocyanat, 2-Methyl-pentamethylendiisocyanat, 2,2,4-Trimethylhexamethylendiisocyanat (THDI), Dodecamethylendiisocyanat, 1,4-Diisocyanatocyclohexan, 4,4'-Diisocyanato-3,3'-dimethyldicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI), 2,4-/2,6-Toluoldiisocyanat (TDI), 2,2'-/4,4'-Methylendiphenyldiisocyanat (MDI), Naphtyldiisocyanat (NDI). Bevorzugt werden hier IPDI, HDI oder TDI bzw. MDI-Derivate verwendet.

Mit eingeschlossen ist selbstverständlich auch die Verwendung, bzw. Mitverwendung der vorstehend erwähnten organischen aliphatischen, cycloaliphatischen oder heterocyclischen Polyisocyanate in Form ihrer Derivate, wie beispielsweise Urethane, Biurete, Allophanate, Uretdione, Isocyanurate und Trimerisate und Mischformen dieser Derivatisierungen.

Isocyanatreaktive Alkoxysilanverbindung der allgemeinen Formel (II) (Komponente C) sind dem Fachmann hinlänglich bekannt. Beispielhaft genannt seien Aminopropyltrimethoxysilan, Mercaptopropyltrimethoxysilan, Aminopropylmethyldimethoxysilan, Mercaptopropylmethyldimethoxysilan, Aminopropyltriethoxysilan, Mercaptopropyltriethoxysilan, Aminopropylmethyldiethoxysilan, Mercaptopropylmethy-diethoxysilan, Aminomethyltrimethoxysilan, Aminomethyl-triethoxysilan, (Aminomethyl)methyldimethoxysilan, (Aminomethyl)methyldiethoxysilan, *N*-Butyl-aminopropyltrimethoxysilan, *N*-Ethyl-aminopropyltrimethoxysilan und *N*-Phenyl-aminopropyltrimethoxysilan.

Des Weiteren können als isocyanatreaktive Verbindungen auch die Asparaginsäureester verwendet werden, wie sie in der EP-A 0 596 360 beschrieben werden. Bei diesen Molekülen der allgemeinen Formel (III) 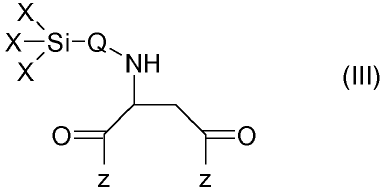 bedeutet X gleiche oder verschiedene Alkoxy- oder Alkylreste, die auch verbrückt sein können, wobei aber an jedem Si-Atom mindestens ein Alkoxyrest vorhanden sein muss, Q ist ein difunktioneller linearer oder verzweigter aliphatischer Rest und Z steht für einen Alkoxyrest mit 1 bis 10 Kohlenstoffatomen. Die Verwendung von solchen Asparaginsäureestern ist bevorzugt. Beispiele für besonders bevorzugte Asparaginsäureester sind *N*-(3-Triethoxysilylpropyl)asparaginsäurediethylester, *N*-(3-Tri-methoxysilylpropyl)-asparaginsäurediethylester und *N*-(3-Dimethoxymethylsilylpropyl)-asparaginsäurediethylester. Ganz besonders bevorzugt ist die Verwendung von *N*-(3-Trimethoxysilylpropyl)asparaginsäurediethylester.

Gegenstand der Erfindung ist ferner ein Verfahren zur Herstellung von mit Alkoxysilangruppen modifizierten Polymeren gemäß vorstehender Beschreibung, dadurch gekennzeichnet, dass zunächst isocyanatreaktive Polymere A1 oder gegebenenfalls Mischungen solcher isocyanatreaktiver Polymere A1 mit isocyanatreaktiven Polymeren A2 (gemäß Definition A mit vorhandenen isocyanatreaktiven Gruppen) mit einem Überschuss Polyisocyanat (Komponente B) zu einem isocyanatfunktionellen Prepolymer umgesetzt werden, welches anschließend durch Umsetzung mit einer isocyanatreaktiven Alkoxysilanverbindung (Komponente C) verkappt wird.

Für die Synthese eines isocyanatfunktionellen Prepolymers wird ein Überschuss an Komponente B verwendet, und zwar vorzugsweise ein NCO : Y¹-H-Verhältnis von 1,3 : 1,0 bis 3,0 : 1,0, besonders bevorzugt von 1,5 : 1,0 bis 2,0 : 1,0 und ganz besonders bevorzugt von 0,8 : 1,0 bis 1,3 : 1,0 gewählt.

Diese Urethanisierung kann durch Katalyse beschleunigt werden. Zur Beschleunigung der NCO-OH-Reaktion kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dioctylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird Dibutylzinndilaurat als Urethanisierungskatalysator eingesetzt.

Im erfindungsgemäßen Verfahren wird diese Katalysatorkomponente, sofern mitverwendet, in Mengen von 0,001 Gew.-% bis 5,0 Gew.-%, bevorzugt 0,001 Gew.-% bis 0,1 Gew.-% und besonders bevorzugt 0,005 Gew.-% bis 0,05 Gew.-% bezogen auf den Festgehalt des Verfahrensprodukts eingesetzt.

Die Urethanisierung der Komponenten A und B wird bei Temperaturen von 20 °C bis 200 °C, bevorzugt 40 °C bis 140 °C und besonders bevorzugt von 60 °C bis 120 °C durchgeführt.

Die Reaktion wird fortgeführt, bis ein vollständiger Umsatz der isocyanatreaktiven Gruppen erreicht ist. Der Verlauf der Reaktion wird sinnvollerweise durch die Überprüfung des NCO-Gehaltes überwacht und ist beendet, wenn der entsprechende theoretische NCO-Gehalt erreicht und konstant ist. Dies kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Es ist unerheblich, ob das erfindungsgemäße Verfahrens kontinuierlich z.B. in einem Statik-Mischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Die weitere Umsetzung mit isocyanatreaktiven Alkoxysilanen (Komponente C) erfolgt innerhalb eines Temperaturbereiches von 0 °C bis 150 °C, vorzugsweise von 20 °C bis 120 °C, wobei die Mengenverhältnisse in der Regel so gewählt werden, dass pro Mol eingesetzter NCO-Gruppen 0,8 bis 1,3 Mol der isocyanatreaktiven Alkoxysilanverbindung eingesetzt werden.

Bei der besonders bevorzugten Verwendung der isocyanatreaktiven Alkoxysilanen der Formel (III) kann es gemäß der Lehre der EP-A 0 807 649 zu einer Cyclokondensation kommen, die die Viskosität der erfindungsgemäßen alkoxysilangruppenaufweisenden Prepolymere noch weiter absenken kann. Dementsprechend kann diese Hydantoinbildung in einer bevorzugten Ausführungsform der vorliegenden Erfindung auch absichtlich herbeigeführt werden.

Diese Cyclokondensation kann durch einfaches Rühren des mit einem isocyanatreaktiven Alkoxysilan der Formel (III) verkappten Polyether-basierenden Polyurethan Prepolymeren bei Temperaturen von 70 °C bis 180 °C, vorzugsweise von 80 °C bis 150 °C herbeigeführt werden. Die Reaktion kann ohne weitere Katalyse, oder, bevorzugt, durch Katalyse beschleunigt durchgeführt werden. Als Katalysatoren kommen sowohl basische, wie auch saure organische Verbindungen in Betracht, beispielsweise N,N,N,N-Benzyltrimethylammoniumhydroxid, andere in organischen Medien lösliche Hydroxide, DBN, DBU, andere Amidine, Zinnoctoat, Dibutylzinndilaurat, andere organische Zinnverbindungen, Zinkoctoat, Essigsäure, andere Alkansäuren, Benzoesäure, Benzoylchlorid, andere Säurechloride oder Dibutylphosphat, bzw. andere Derivate der Phosphorsäure. Der Katalysator wird in Mengen von 0,005 Gew.-% bis 5 Gew.-%, bevorzugt 0,05 Gew.-% bis 1 Gew.-% zugegeben.

Ein weiterer Gegenstand der Erfindung sind Klebstoffe, Beschichtungen oder Schäume basierend auf den erfindungsgemäßen Polyurethanprepolymeren. Diese Klebstoffe, Beschichtungen oder Schäume vernetzen unter Einwirkung von Luftfeuchtigkeit über eine Silanolpolykondensation. Bevorzugt ist der Einsatz der erfindungsgemäßen Prepolymeren in Klebstoffen, besonders bevorzugt in Klebstoffen, die nach DIN EN 14293 eine Zugscherfestigkeit von mindestens 5 N/mm², bevorzugt von mehr als 6 N/mm², besonders bevorzugt von mehr als 8 N/mm² aufweisen.

Zur Herstellung solcher Klebstoffe, Beschichtungen und Schäume können die erfindungsgemäßen Alkoxysilan-Endgruppen aufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren formuliert werden.

Typische erfindungsgemäße Klebstoff- und Beschichtungszubereitungen enthalten beispielsweise 10 Gew.-% bis 100 Gew.-% eines mit Alkoxysilangruppen modifizierten Polymers nach einem der Ansprüche 1 bis 4 oder eines Gemisches aus zwei oder mehreren solcher mit Alkoxysilangruppen modifizierten Polymere, bis zu 30 Gew.-% eines Weichmachers oder eines Gemisches aus zwei oder mehreren Weichmachern, bis zu 30 Gew.-% eines Lösemittels oder eines Gemisches aus zwei oder mehreren Lösemitteln, bis zu 5 Gew.-% eines Feuchtigkeits-Stabilisators oder eines Gemisches aus zwei oder mehreren Feuchtigkeits-Stabilisatoren, bis zu 5 Gew.-% eines UV-Stabilisators oder eines Gemisches aus zwei oder mehreren UV-Stabilisatoren, bis zu 5 Gew.-% eines Katalysators oder eines Gemisches aus zwei oder mehreren Katalysatoren und bis 80 Gew.-% eines Füllstoffs oder eines Gemisches aus zwei oder mehreren Füllstoffen.

Als geeignete Füllstoffe seien beispielhaft Ruß, Fällungskieselsäuren, pyrogene Kieselsäuren, mineralische Kreiden und Fällungskreiden genannt. Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung können alle metallorganischen Verbindungen und aminischen Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bis-acetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Diisobutyl-bisacetessigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

Die nachfolgenden Beispiele veranschaulichen die vorliegende Erfindung, ohne sie zu beschränken.

### Beispiele:

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden nach ISO/DIS 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser , 1° Kegelwinkel) durchgeführt.

Die zur Zeit der Versuchsdurchführung herrschende Umgebungstemperatur von 23 °C wird als RT bezeichnet.

### Beispiel 1 (erfindungsgemäß):

In einem 1 L-Sulfierbecher mit Deckel, Rührer, Thermometer und Stickstoffdurchfluss wurde eine Mischung von 833,4 g Polypropylenglykol mit einer Hydroxylzahl von 56 mg KOH/g und 0,07 g Dibutylzinndilaurat (Desmorapid® Z, Bayer MaterialScience AG, Leverkusen, DE) auf 40 °C erwärmt. Anschließend wurden 166,6 g 2,4'-MDI (Desmodur® 24 M, Bayer MaterialScience AG, Leverkusen, DE) zugegeben und bis zum Erreichen des theoretischen NCO-Gehaltes von 2,10 % prepolymerisiert. Anschließend wurden bei 40 °C 175,7 g N-(3-Trimethoxysilylpropyl)asparaginsäure-diethylester (hergestellt gemäß EP-A 596 360, Bsp. 5) zugegeben, und es wurde gerührt, bis titrimetrisch kein NCO-Gehalt mehr nachzuweisen war. Das erhaltene alkoxysilanendgruppenaufweisende Polyurethanprepolymer hatte eine Viskosität von 44550 mPas (23 °C) und ein zahlenmittleres Molekulargewicht von 4800 g/mol.

### Beispiel 2 (erfindungsgemäß):

In einem 1 L-Sulfierbecher mit Deckel, Rührer, Thermometer und Stickstoffdurchfluss wurden 833,4 g Polypropylenglykol mit einer Hydroxylzahl von 56 mg KOH/g auf 60 °C erwärmt. Anschließend wurden 164,1 g 2,4'-MDI (Desmodur® 24 M, Bayer MaterialScience AG, Leverkusen, DE) zugegeben und bis zum Erreichen des theoretischen NCO-Gehaltes von 2,10 % prepolymerisiert. Anschließend wurden bei 60 °C 173,2 g N-(3-Trimethoxysilylpropyl)asparaginsäure-diethylester (hergestellt gemäß EP-A 0 596 360, Bsp. 5) zugegeben, und es wurde gerührt, bis titrimetrisch kein NCO-Gehalt mehr nachzuweisen war. Das erhaltene alkoxysilanendgruppenaufweisende Polyurethanprepolymer hatte eine Viskosität von 81400 mPas (23 °C) und ein zahlenmittleres Molekulargewicht von 5900 g/mol.

### Vergleichsbeispiel 1:

In einem 1L-Sulfierbecher mit Deckel, Rührer, Thermometer und Stickstoffdurchfluss wurde eine Mischung von 881,9 g Polypropylenglykol mit einer Hydroxylzahl von 56 mg KOH/g und 0,07 g Dibutylzinndilaurat (Desmorapid® Z; Bayer MaterialScience AG, Leverkusen, DE) auf 60 °C erwärmt. Anschließend wurden 118,1 g Toluylendiisocyanat (Desmodur® T 100, Bayer MaterialScience AG, Leverkusen, DE) zugegeben und bis zum Erreichen des theoretischen NCO-Gehaltes von 2,07 % prepolymerisiert. Anschließend wurden bei 60 °C 173,2 g N-(3-Trimethoxysilylpropyl)asparaginsäure-diethylester (hergestellt gemäß EP-A 0 596 360, Bsp. 5) zugegeben, und es wurde gerührt, bis titrimetrisch kein NCO-Gehalt mehr nachzuweisen war. Das erhaltene alkoxysilanendgruppenaufweisende Polyurethanprepolymer hatte eine Viskosität von 70930 mPas (23 °C) und ein zahlenmittleres Molekulargewicht von 6200 g/mol.

### Vergleichsbeispiel 2:

In einem 1 L-Sulfierbecher mit Deckel, Rührer, Thermometer und Stickstoffdurchfluss wurde eine Mischung von 835,9 g Polypropylenglykol mit einer Hydroxylzahl von 56 mg KOH/g und 0,07 g Dibutylzinndilaurat (Desmorapid® Z; Bayer MaterialScience AG, Leverkusen, DE) auf 60 °C erwärmt. Anschließend wurden 164,1g MDI (Desmodur® 2460 M; Bayer MaterialScience AG, Leverkusen, DE) zugegeben und bis zum Erreichen des theoretischen NCO-Gehaltes von 2,07 % prepolymerisiert. Anschließend wurden bei 60 °C 173,2 g N-(3-Trimethoxysilylpropyl)asparaginsäure-diethylester (hergestellt gemäß EP-A 0 596 360, Bsp. 5) zugegeben, und es wurde gerührt, bis titrimetrisch kein NCO-Gehalt mehr nachzuweisen war. Das erhaltene alkoxysilanendgruppenaufweisende Polyurethanprepolymer hatte eine Viskosität von 303200 mPas (23 °C) und ein zahlenmittleres Molekulargewicht von 5200 g/mol.

### Vergleichsbeispiel 3:

In einem 1 L-Sulfierbecher mit Deckel, Rührer, Thermometer und Stickstoffdurchfluss wurde eine Mischung von 745,9 g Polypropylenglykol mit einer Hydroxylzahl von 28 mg KOH/g und 0,07 g Dibutylzinndilaurat (Desmorapid® Z, Bayer MaterialScience AG, Leverkusen, DE) auf 60 °C erwärmt. Anschließend wurden 104,1 g 2,4'-MDI (Desmodur® 24 M, Bayer MaterialScience AG, Leverkusen, DE) zugegeben und bis zum Erreichen des theoretischen NCO-Gehaltes von 2,10 % prepolymerisiert. Anschließend wurden bei 60 °C 148,7 g N-(3-Trimethoxysilylpropyl)asparaginsäure-diethylester (hergestellt gemäß EP-A 0 596 360, Bsp. 5) zugegeben, und es wurde gerührt, bis titrimetrisch kein NCO-Gehalt mehr nachzuweisen war. Das erhaltene alkoxysilanendgruppenaufweisende Polyurethanprepolymer hatte eine Viskosität von 33200 mPas (23 °C) und ein zahlenmittleres Molekulargewicht von 5200 g/mol.

### Bestimmung der Hautbildezeit

Mittels eines Rakels (200 µm) wird ein Film auf eine vorher mit Ethylacetat gereinigte Glasplatte aufgetragen und sofort in den Drying Recorder eingelegt. Die Nadel wird mit 10 g belastet und bewegt sich über eine Zeitraum von 24 Stunden über eine Strecke von 35 cm.

Der Drying Recorder befindet sich in einem Klimaraum bei 23 °C und 50 % rel. Luftfeuchte.

Als Hautbildezeit wird der Zeitpunkt des Verschwindens der permanenten Spur der Nadel aus dem Film angegeben.

### Anwendungstechnische Beispiele

Zur Beurteilung der anwendungstechnischen Eigenschaften der verschiedenen Polymere wurden diese in folgender Formulierung verarbeitet:

| | **Einsatzmenge in Gew.%** |
|---|---|
| Polymer | 46,06 |
| Füllstoff (Socal® U₁S₂) | 49,75 |
| Trocknungsmittel (Dynasylan® VTMO) | 2,76 |
| Haftvermittler (Dynasylan® 1146) | 1,38 |
| Katalysator (Lupragen® N700) | 0,05 |

Zur Herstellung der Formulierung wird als Bindemittel das Polymer mit dem Füllstoff (Socal® U1S2 der Fa. Solvay GmbH) und dem Trocknungsmittel (Dynasylan® VTMO; Fa. Evonik AG, Deutschland) versetzt und in einem Vakuumdissolver mit Wandabstreifer bei 3000 U/min vermischt. Anschließend wird der Haftvermittler (Dynasylan® 1146 der Fa. Evonik) hinzugefügt und innerhalb von 5 min bei 1000 U/min untergerührt. Zuletzt wird der Katalysator (Lupragen® N700 der Fa. BASF SE) bei 1000 U/min eingerührt und abschließend die fertige Mischung im Vakuum entlüftet.

Zur Messung der physikalischen Eigenschaften werden sowohl Membranen von 2 mm Dicke, als auch Proben zur Bestimmung der Zugscherfestigkeit hergestellt. Zur Messung der Zugscherfestigkeit werden Probenkörper aus Eiche verwendet, die für 7 Tage bei 23 °C/50 % rel. Luftfeuchte, anschließend 20 Tage bei 40 °C und danach einen Tag bei 23 °C/50 % rel. Luftfeuchte gelagert werden.

Die Härte der Filme wird gemäß DIN 53505 gemessen und die Zugscherfestigkeit gemäß DIN EN 14293.

Die folgende Tabelle zeigt die erhaltenen Ergebnisse:

| | **Vgl. 1** | **Vgl. 2** | **Vgl. 3** | **Bsp. 1** | **Bsp. 2** |
|---|---|---|---|---|---|
| Shore D Härte | 26 | 31 | 29 | 23 | 27 |
| Zugscherfestigkeit [N/mm²] | 3,1 | 4,6 | 3,8 | 6,5 | 5,6 |
| Hautbildezeit [min] | 60 | 45 | 35 | 60 | 30 |

## Patentansprüche

1. Alkoxysilanterminierte, bei Raumtemperatur flüssige Polyurethan-Prepolymere einer Viskosität kleiner 1000 Pas, ermittelt nach ISO/DIS 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser, 1° Kegelwinkel), erhältlich durch Umsetzung
a) eines isocyanatfunktionellen Prepolymers, welches Struktureinheiten der allgemeinen Formel (I) enthält, 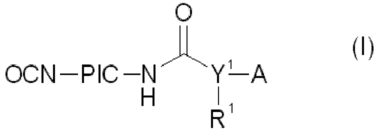 worin
PIC für einen um die Isocyanatgruppen reduzierten Rest von 2,4'- Methylendiphenyldiisocyanat (2,4'-MDI) oder von einer Kombination von 2,4'-Methylendiphenyldiisocyanat mit einem anderen Polyisocyanat ist, wobei der Anteil von 2,4'-Methylendiphenyldiisocyanat mindestens 50 Gew.-% jeweils bezogen auf die Polyisocyanatkomponente (Komponente B) beträgt,
Y¹ für Stickstoff, Sauerstoff oder Schwefel steht,
R¹ entweder für ein freies Elektronenpaar oder Wasserstoff oder für einen beliebigen organischen Rest steht,
A ein um die isocyanatreaktiven Gruppen reduzierter Rest eines Isocyanat-reaktiven Polymers, das aus in beliebiger Reihenfolge, also blockweise, alternierend oder statistisch, miteinander über das aus den Polyisocyanaten B stammende Strukturelement der Formel
-Y²-(C=O)-NH-PIC-NH-(C=O)-Y¹(R¹)-
-worin
Y¹ und Y² unabhängig voneinander für Stickstoff, Sauerstoff oder Schwefel stehen,
verknüpften Polyetherpolyolen, Polyesterpolyolen, Polycarbonatpolyolen oder Polytetrahydrofuranpolyolen aufgebaut ist, wobei es sich bei den terminalen Gruppen dieser Substrukturen, ganz oder teilweise, auch um die entsprechenden Thioverbindungen oder Aminderivate handeln kann, wobei es sich
zu 50-100 Gew.-% um Substrukturen A1 eines mittleren Molekulargewichts (Mn) zwischen 200 g/mol und 2000 g/mol und
zu 0-50 Gew.-% um Substrukturen A2 eines mittleren Molekulargewichts (Mn) von mehr als 2000 g/mol handelt,
wobei A insgesamt eine mittlere Funktionalität von 2 - 4 aufweist,
mit
b) einer isocyanatreaktiven Alkoxysilanverbindung (Komponente C) der allgemeinen Formel (II): 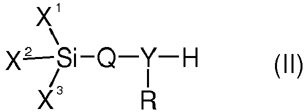 worin
X¹, X² und X³ gleiche oder verschiedene Alkoxy- oder Alkylreste sind, die auch verbrückt sein können, wobei aber an jedem Si-Atom mindestens ein Alkoxyrest vorhanden sein muss,
Q ein difunktioneller linearer oder verzweigter aliphatischer Rest ist,
Y für Stickstoff oder Schwefel steht,
R entweder für ein freies Elektronenpaar oder Wasserstoff oder für einen beliebigen organischen Rest steht.

2. Verbindungen gemäß Anspruch 1 wobei der Anteil 2,4'-Methylendiphenyldiisocyanat bevorzugt größer 70 Gew.-%, besonders bevorzugt größer 90 Gew.-%, jeweils bezogen auf die Polyisocyanatkomponente, beträgt.

3. Verbindungen gemäß Anspruch 1 mit einem zahlenmittleren Molekulargewicht von kleiner 7000 g/mol, bevorzugt mit einem zahlenmittleren Molekulargewicht von kleiner 5000 g/mol.

4. Verbindungen gemäß Anspruch 1 mit einer Viskosität kleiner 1000 Pas bei 23 °C, bevorzugt mit einer Viskosität kleiner 500 Pas bei 23 °C, besonders bevorzugt mit einer Viskosität kleiner 100 Pas bei 23 °C.

5. Verfahren zur Herstellung von mit Alkoxysilangruppen modifizierten Polymeren gemäß Anspruch 1 bis 4, **dadurch gekennzeichnet, dass** zunächst isocyanatreaktive Polymere A1 oder gegebenenfalls Mischungen solcher isocyanatreaktiver Polymere A1 mit isocyanatreaktiven Polymeren A2 (gemäß Definition A mit vorhandenen isocyanatreaktiven Gruppen) mit einem Überschuss Polyisocyanat (Komponente B) zu einem isocyanatfunktionellen Prepolymer umgesetzt werden, welches anschließend durch Umsetzung mit einer isocyanatreaktiven Alkoxysilanverbindung (Komponente C) verkappt wird.

6. Verfahren gemäß Anspruch 5, **dadurch gekennzeichnet, dass** zur Synthese des isocyanatfunktionellen Prepolymers ein Überschuss an Polyisocyanat in einem Verhältnis NCO zu Y¹-H von 1,3 zu 1,0 bis 3,0 zu 1,0 eingesetzt werden.

7. Verfahren gemäß Anspruch 5, **dadurch gekennzeichnet, dass** zur Synthese des isocyanatfunktionellen Prepolymers ein Überschuss an Polyisocyanat in einem Verhältnis NCO zu Y¹-H von 1,5 zu 1,0 bis 2,0 zu 1,0 eingesetzt werden.

8. Verfahren gemäß Anspruch 5, **dadurch gekennzeichnet, dass** zur Synthese des isocyanatfunktionellen Prepolymers ein Überschuss an Polyisocyanat in einem Verhältnis NCO zu Y¹-H von 0,8 zu 1,0 bis 1,3 zu 1,0 eingesetzt werden.

9. Verwendung der mit Alkoxysilangruppen modifizierten Polymere gemäß Ansprüchen 1 bis 4 in Klebstoffen, Beschichtungen und Schäumen.

10. Klebstoff- und Beschichtungszubereitungen enthaltend
10 Gew.-% bis 100 Gew.-% eines mit Alkoxysilangruppen modifizierten Polymers nach einem der Ansprüche 1 bis 4 oder eines Gemisches aus zwei oder mehreren solcher mit Alkoxysilangruppen modifizierten Polymere,
0 Gew.-% bis 30 Gew.-% eines Weichmachers oder eines Gemisches aus zwei oder mehreren Weichmachern
0 Gew.-% bis 30 Gew.-% eines Lösemittels oder eines Gemisches aus zwei oder mehreren Lösemitteln
0 Gew.-% bis 5 Gew.-% eines Feuchtigkeits-Stabilisators oder eines Gemisches aus zwei oder mehreren Feuchtigkeits-Stabilisatoren
0 Gew.-% bis 5 Gew.-% eines UV-Stabilisators oder eines Gemisches aus zwei oder mehreren UV-Stabilisatoren
0 Gew.-% bis 5 Gew.-% eines Katalysators oder eines Gemisches aus zwei oder mehreren Katalysatoren
0 Gew.-% bis 80 Gew.-% eines Füllstoffs oder eines Gemisches aus zwei oder mehreren Füllstoffen,
wobei sich die Anteile der Komponenten zu 100 Gew.-% summieren.

## Claims

1. Alkoxysilane-terminated polyurethane prepolymers liquid at room temperature and with a viscosity of less than 1000 Pas, determined according to ISO/DIS 3219:1990 at a constant temperature of 23°C and a constant shear rate of 250/sec with a Physica MCR cone/plate rotational viscosimeter (from Anton Paar Germany GmbH, Ostfildern, DE) using the CP 25-1 measuring cone (25 mm diameter, 1° cone angle), obtainable by reacting
a) an isocyanate-functional prepolymer which comprises structural units of the general formula (I), 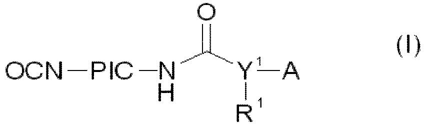 in which
PIC is a radical, reduced by its isocyanate groups, of 2,4'-methylenediphenyl diisocyanate (2,4'-MDI) or of a combination of 2,4'-methylenediphenyl diisocyanate with another polyisocyanate, the fraction of 2,4'-methylenedisphenyl diisocyanate being at least 50 wt%, based in each case on the polyisocyanate component (component B),
Y¹ is nitrogen, oxygen or sulfur,
R¹ either is a free electron pair or hydrogen or is any desired organic radical,
A is a radical, reduced by its isocyanatereactive groups, of an isocyanatereactive polymer that is constructed from polyether polyols, polyester polyols, polycarbonate polyols or polytetrahydrofuran polyols that are linked with one another in any order, i.e. blockwise, alternately or randomly, via the structural element originating from the polyisocyanates B and having the formula
**-Y²-(C=O)-NH-PIC-NH-(C=O)-Y¹(R¹)-**
-in which
Y¹ and Y² independently of one another are nitrogen, oxygen or sulfur,
it also being possible for the terminal groups of these substructures, wholly or partly, to comprise the corresponding thio compounds or amine derivatives, and
50-100 wt% are substructures A1 with an average molecular weight (Mn) of between 200 g/mol and 2000 g/mol and
0-50 wt% are substructures A2 with an average molecular weight (Mn) of more than 2000 g/mol,
and A overall has an average functionality of 2 - 4,
with
b) an isocyanate-reactive alkoxysilane compound (component C) of the general formula (II): 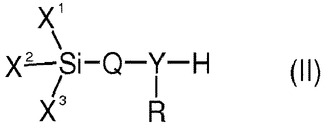 in which
X¹, X² and X³ are identical or different alkoxy or alkyl radicals, which may also be bridged, but where there must be at least one alkoxy radical on each Si atom,
Q is a difunctional, linear or branched aliphatic radical,
Y is nitrogen or sulfur,
R either is a free electron pair or hydrogen or is any desired organic radical.

2. Compounds according to Claim 1 where the fraction of 2,4'-methylenediphenyl diisocyanate is preferably greater than 70 wt%, more preferably greater than 90 wt%, in each case based on the polyisocyanate component.

3. Compounds according to Claim 1 having a number-average molecular weight of less than 7000 g/mol, preferably having a number-average molecular weight of less than 5000 g/mol.

4. Compounds according to Claim 1 having a viscosity of less than 1000 Pas at 23°C, preferably having a viscosity of less than 500 Pas at 23°C, more preferably having a viscosity of less than 100 Pas at 23°C.

5. Process for preparing polymers modified with alkoxysilane groups according to Claim 1 to 4, **characterized in that** first of all isocyanate-reactive polymers A1 or optionally mixtures of such isocyanate-reactive polymers A1 with isocyanate-reactive polymers A2 (as per definition of A with isocyanate-reactive groups present) are reacted with an excess of polyisocyanate (component B) to give an isocyanate-functional prepolymer, which is subsequently masked by reaction with an isocyanate-reactive alkoxysilane compound (component C).

6. Process according to Claim 5, **characterized in that** the isocyanate-functional prepolymer is synthesized using an excess of polyisocyanate in an NCO to Y¹-H ratio of 1.3:1.0 to 3.0:1.0.

7. Process according to Claim 5, **characterized in that** the isocyanate-functional prepolymer is synthesized using an excess of polyisocyanate in an NCO to Y¹-H ratio of 1.5:1.0 to 2.0:1.0.

8. Process according to Claim 5, **characterized in that** the isocyanate-functional prepolymer is synthesized using an excess of polyisocyanate in an NCO to Y¹-H ratio of 0.8:1.0 to 1.3:1.0.

9. Use of the polymers modified with alkoxysilane groups according to Claims 1 to 4 in adhesives, coatings and foams.

10. Adhesive and coating preparations comprising
10 wt% to 100 wt% of a polymer modified with alkoxysilane groups according to any of Claims 1 to 4, or of a mixture of two or more such polymers modified with alkoxysilane groups,
0 wt% to 30 wt% of a plasticizer or of a mixture of two or more plasticizers
0 wt% to 30 wt% of a solvent or of a mixture of two or more solvents
0 wt% to 5 wt% of a moisture stabilizer or of a mixture of two or more moisture stabilizers
0 wt% to 5 wt% of a UV stabilizer or of a mixture of two or more UV stabilizers
0 wt% to 5 wt% of a catalyst or a mixture of two or more catalysts
0 wt% to 80 wt% of a filler or of a mixture of two or more fillers,
the fractions of the components adding up to 100 wt%.

## Revendications

1. Prépolymères de polyuréthane liquides à température ambiante, à terminaison alcoxysilane, d'une viscosité inférieure à 1 000 Pas, déterminée selon ISO/DIS 3219:1990 à une température constante de 23 °C et à un taux de cisaillement constant de 250/s avec un viscosimètre rotatif plan-cône de type Physica MCR (société Anton Paar Germany GmbH, Ostfildern, DE) en utilisant le cône de mesure CP 25-1 (diamètre 25 mm, angle de cône 1°), pouvant être obtenus par la mise en réaction de
a) un prépolymère à fonction isocyanate, qui contient des unités structurales de formule générale (I) 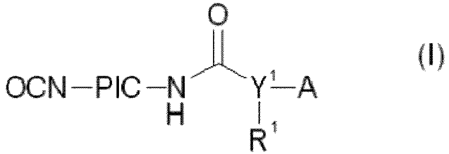 dans laquelle
PIC représente un radical réduit des groupes isocyanate de diisocyanate de 2,4'-méthylène-diphényle (2,4'-MDI) ou d'une combinaison de diisocyanate de 2,4'-méthylène-diphényle avec un autre polyisocyanate, la proportion de diisocyanate de 2,4'-méthylène-diphényle étant d'au moins 50 % en poids, à chaque fois par rapport au composant polyisocyanate (composant B),
Y¹ représente l'azote, l'oxygène ou le soufre,
R¹ représente soit une paire d'électrons libres, soit l'hydrogène, soit un radical organique quelconque,
A représente un radical réduit des groupes réactifs avec les isocyanates d'un polymère réactif avec les isocyanates, qui est formé par des polyéther-polyols, des polyester-polyols, des polycarbonate-polyols ou des polytétrahydrofurane-polyols reliés dans un ordre quelconque, c'est-à-dire séquentiellement, en alternance ou statistiquement, les uns avec les autres par l'élément structural provenant des polyisocyanates B de formule
-Y²-(C=O)-NH-PIC-NH-(C=O)-Y¹(R¹)-
dans laquelle
Y¹ et Y² représentent indépendamment l'un de l'autre l'azote, l'oxygène ou le soufre,
les groupes terminaux de ces sous-structures pouvant également consister, en totalité ou en partie, en les composés thio ou les dérivés d'amine correspondants, celles-ci consistant
à hauteur de 50 à 100 % en poids en des sous-structures A1 ayant un poids moléculaire moyen (Mn) compris entre 200 g/mol et 2 000 g/mol et
à hauteur de 0 à 50 % en poids en des sous-structures A2 ayant un poids moléculaire moyen (Mn) supérieur à 2 000 g/mol,
A présentant au total une fonctionnalité moyenne de 2 à 4,
avec
b) un composé d'alcoxysilane réactif avec les isocyanates (composant C) de formule générale (II) : 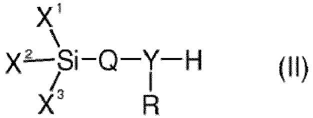 dans laquelle
X¹, X² et X³ sont des radicaux alcoxy ou alkyle identiques ou différents, qui peuvent également être pontés, au moins un radical alcoxy devant toutefois être présent sur chaque atome Si,
Q est un radical aliphatique bifonctionnel linéaire ou ramifié,
Y représente l'azote ou le soufre,
R représente soit une paire d'électrons libres, soit l'hydrogène, soit un radical organique quelconque.

2. Composés selon la revendication 1, dans lesquels la proportion de diisocyanate de 2,4'-méthylène-diphényle est de préférence supérieure à 70 % en poids, de manière particulièrement préférée supérieure à 90 % en poids, à chaque fois par rapport au composant polyisocyanate.

3. Composés selon la revendication 1, ayant un poids moléculaire moyen en nombre inférieur à 7 000 g/mol, de préférence ayant un poids moléculaire moyen en nombre inférieur à 5 000 g/mol.

4. Composés selon la revendication 1, ayant une viscosité inférieure à 1 000 Pas à 23 °C, de préférence ayant une viscosité inférieure à 500 Pas à 23 °C, de manière particulièrement préférée ayant une viscosité inférieure à 100 Pas à 23 °C.

5. Procédé de fabrication de polymères modifiés avec des groupes alcoxysilane selon les revendications 1 à 4, **caractérisé en ce que** des polymères réactifs avec les isocyanates A1 ou éventuellement des mélanges de tels polymères réactifs avec les isocyanates A1 avec des polymères réactifs avec les isocyanates A2 (selon la définition A avec des groupes réactifs avec les isocyanates présents) sont tout d'abord mis en réaction avec un excès de polyisocyanate (composant B) pour former un prépolymère à fonction isocyanate, qui est ensuite coiffé par mise en réaction avec un composé d'alcoxysilane réactif avec les isocyanates (composant C) .

6. Procédé selon la revendication 5, **caractérisé en ce qu'**un excès de polyisocyanate en un rapport NCO sur Y¹-H de 1,3 sur 1,0 à 3,0 sur 1,0 est utilisé pour la synthèse du prépolymère à fonction isocyanate.

7. Procédé selon la revendication 5, **caractérisé en ce qu'**un excès de polyisocyanate en un rapport NCO sur Y¹-H de 1,5 sur 1,0 à 2,0 sur 1,0 est utilisé pour la synthèse du prépolymère à fonction isocyanate.

8. Procédé selon la revendication 5, **caractérisé en ce qu'**un excès de polyisocyanate en un rapport NCO sur Y¹-H de 0,8 sur 1,0 à 1,3 sur 1,0 est utilisé pour la synthèse du prépolymère à fonction isocyanate.

9. Utilisation des polymères modifiés avec des groupes alcoxysilane selon les revendications 1 à 4 dans des adhésifs, des revêtements et des mousses.

10. Préparations d'adhésif et de revêtement, contenant :
10 % en poids à 100 % en poids d'un polymère modifié avec des groupes alcoxysilane selon l'une quelconque des revendications 1 à 4 ou d'un mélange de deux tels polymères modifiés avec des groupes alcoxysilane ou plus,
0 % en poids à 30 % en poids d'un plastifiant ou d'un mélange de deux plastifiants ou plus,
0 % en poids à 30 % en poids d'un solvant ou d'un mélange de deux solvants ou plus,
0 % en poids à 5 % en poids d'un stabilisateur d'humidité ou d'un mélange de deux stabilisateurs d'humidité ou plus,
0 % en poids à 5 % en poids d'un stabilisateur UV ou d'un mélange de deux stabilisateurs UV ou plus,
0 % en poids à 5 % en poids d'un catalyseur ou d'un mélange de deux catalyseurs ou plus,
0 % en poids à 80 % en poids d'une charge ou d'un mélange de deux charges ou plus,
la somme des proportions des composants étant de 100 % en poids.
